Europäisches Patentamt

European Patent Office

Office européen des brevets

(11) Publication number: **0 206 352 B1**

# EUROPEAN PATENT SPECIFICATION

(45) Date of publication of patent specification: **03.06.92**    (51) Int. Cl.⁵: **H04B 14/06**

(21) Application number: **86108782.3**

(22) Date of filing: **27.06.86**

---

(54) Coding transmission equipment for carrying out coding with adaptive quantization.

---

(30) Priority: **28.06.85 JP 142307/85**
**29.01.86 JP 15784/86**
**20.03.86 JP 60972/86**
**09.04.86 JP 80063/86**

(43) Date of publication of application:
**30.12.86 Bulletin 86/52**

(45) Publication of the grant of the patent:
**03.06.92 Bulletin 92/23**

(84) Designated Contracting States:
**DE FR GB IT**

(56) References cited:
**EP-A- 0 145 788**
**US-A- 4 292 651**

**PATENT ABSTRACTS OF JAPAN, vol. 9, no.**
**35 (E-296)[1758], 14th February 1985; & JP-**
**A-59 178 030**

**IEEE INTERNATIONAL CONFERENCE ON**
**COMMUNICATIONS 1985, Chicago, Illinois,**
**23rd-26th June 1985, vol. 2 of 3, pages**
**917-920, IEEE, New York, US; V. RAMAMOOR-**
**THY et al.: "Enhancement of ADPCM speech**
**by adaptive postfiltering"**

(73) Proprietor: **FUJITSU LIMITED**
**1015, Kamikodanaka Nakahara-ku**
**Kawasaki-shi Kanagawa 211(JP)**

(72) Inventor: **Taniguchi, Tomohiko**
**Heiwa-so 2, 1765, Hiyoshihoncho, Kohoku-ku**
**Yokohama-shi Kanagawa 223(JP)**
Inventor: **Iseda, Kohei**
**Fujitsu Aobadai-ryo 1201 54-10, Shiratori-dai**
**Midori-ku Yokohama-shi Kanagawa 227(JP)**
Inventor: **Tomita, Yoshihiro**
**2-22-26, Tokumaru, Itabashi-ku**
**Tokyo 175(JP)**
Inventor: **Unagami, Shigeyuki**
**2451-79, Iriya 4-chome**
**Zama-shi Kanagawa 228(JP)**
Inventor: **Tominaga, Shoji**
**Dai-2 Ogura-so 6, 1361, Shukugawara, Tama-**
**ku**
**Kawasaki-shi Kanagawa 214(JP)**

(74) Representative: **Eitle, Werner, Dipl.-Ing. et al**
**Hoffmann, Eitle & Partner Patentanwälte Ar-**
**abellastrasse 4**
**W-8000 München 81(DE)**

---

**Description**

BACKGROUND OF THE INVENTION

1. Field of the Invention

The present invention relates to coding tranmission equipment in which an input signal, such as a voice signal or a picture signal, is coded and transmitted to a receiver side from a transmitter side and a received signal is decoded to become an original signal at the receiver side. In particular, the present invention relates to low bit rate coding equipment (bandwidth compression coding equipment), such as an ADPCM (Adaptive Differential Pulse Code Modulation) system CODEC (COder and DECoder), which carries out low bit rate coding of a voice or picture signal.

When the voice signal etc., is transmitted, bandwidth compression is required to ensure an efficient utilization of a transmission line. The low bit rate coding transmission equipment for the voice signal carries out information compression while maintaining the quality of the voice signal, which enables a reduction of line costs for the transmission of the voice information in equipment used for , for example, mobile radio communication, satellite communication, or office inter communication system, and a reduction of storage capacity needed, for example, for the storage of voice information in an audio response system.

2. Description of the Related Art

ADPCM coding equipment is related to the present invention in that it carries out coding by adaptive quantization. In the ADPCM coding equipment, a prediction error E corresponding to a difference between a current input signal X and a predicted value $\hat{X}$ obtained on the basis of past input signals is produced and quantized at the transmitter side. At this time, adaptive quantization, in which the size of a quantizing step is increased or decreased in accordance with a quantizing level of a signal sampled just prior to the current sampled signal, is carried out in order to realize a quick adaptation to a sudden change of the predicted error, instead of uniform quantization, whereby a high quality recovered signal is realized.

In this case, however, the sizes to which the quantizing step can increased or decreased are limited, and therefore, when the input signals are voice signals, for example, a voiced sound, an unvoiced sound, or a voicelessness, etc., the nature of the signals changes from moment to moment and the coding system of the prior art cannot cope with these rapid variations in the voice signal. As a result, an optimum quantization is not realized, and thus the voice recovered at the receiver side has a poor quality.

EP-A-0 145 788 describes a transmitting and receiving device for digital signals in which an input signal is divided into blocks of a predetermined number of bits and for each block one of the general mode PCM, differential mode PCM and summation mode PCM is selected depending on which mode is most efficient for adaptive encoding and consequently the quantization noise is smallest. The device includes an evaluation circuit for deciding which mode is most efficient based on the maximum compression rate. The device also includes a receiver device which separates the received signal in a multiplexer and adaptively restores the signal.

JP-A-59-178 030 describes an adaptive differential coding system in which a plurality of quantizing circuits are provided. Depending on the output of a coding circuit, a changeover circuit controls a switch to switch to one of the quantizing circuits.

SUMMARY OF THE INVENTION

Accordingly, it is an object of the present invention to provide coding transmission equipment which can obtain a high quality recovered signal, for example, a voice signal recovered at a receiver side.

The object of the present invention is solved by a coding transmission equipment having a transmitter device and a receiver device, the transmitter device comprising: a plurality of coding units and an adaptive quantizer for outputting a quantized value according to an input signal and an error calculating unit for calculating the quantization error of the adaptive quantizer, each of said plurality of coding units having different processing characteristics; an evaluating unit for deciding which is an optimum coding unit to carry out an optimum quantization from among said plurality of coding units at every frame of an input signal; and a sending unit for selecting an optimum quantized value of said optimum coding unit from among quantized values input from said plurality of coding units respectively on the basis of a decision by said evaluating unit and transmitting the optimum quantized value together with the decision information; and the receiver device comprising: a dividing unit for dividing a received signal from the transmitter device into said quantized value and said decision information; an adaptive decoding unit for decoding the quantized value obtained by the dividing unit into the original input signal; and an optimum controlling unit for controlling the processing characteristic of the adaptive decoding unit to become an optimum processing characteristic according to the decision information obtained by the dividing unit, **characterized by,** in said transmitter device: said coding units being adaptive coding units each adaptive coding unit having a different adaptive quantizer processing characteristic, said evaluating unit deciding on the optimum adaptive coding unit on the basis of quantization errors input from said plurality of adaptive coding units, respectively, a parameter copy unit in which parameters for determining an inner condition of said adaptive coding units are input from all of said plurality of adaptive coding units, and an optimum parameter of an optimum adaptive coding unit is selected and sent to other adaptive coding units at every frame according to a decision by the evaluating unit; and each of said other adaptive coding units starting a signal process for a next frame after copying said optimum parameter sent from said parameter copy unit as an own parameter.

The object of the invention is also solved by a transmitter device adapted to a coding transmission equipment for carrying out coding with an adaptive quantization, comprising: a plurality of coding units and an adaptive quantizer for outputting a quantized value according to an input signal and an error calculating unit for calculating a quantization error of the adaptive quantizer wherein each of said plurality of coding units has a different processing characteristic; an evaluating unit for deciding which is an optimum coding unit to carry out an optimum quantization from among said plurality of coding units at every frame of an input signal, and a sending unit for selecting an optimum quantized value of said optimum coding unit from among quantized values input from said plurality of coding units respectively on the basis of a decision by an evaluating unit and transmitting an optimum quantized value together with the decision information, characterized by said coding units being adaptive coding units, each adaptive coding unit having a different adaptive quantizer processing characteristic, said evaluating unit deciding on the optimum adaptive coding unit on the basis of quantization errors input from said plurality of adaptive coding units respectively; a parameter copy unit in which parameters for determining an inner condition of said adaptive coding unit are input from all of said plurality of adaptive coding units and an optimum parameter of said optimum adaptive coding unit is selected and sent to other adaptive coding units at every frame according to a decision by the evaluating unit; and each of said other adaptive coding units starting a signal processing of a next frame after copying the optimum parameter sent from the parameter copy unit as an own parameter.

According to still another aspect of the present invention, the transmitter device further comprises an error correction coding unit for carrying out an error correction coding process for the decision information from the evaluating unit, whereby the decision information processed by the error correction coding is sent to the receiver device; and the receiver device further comprises an error correcting unit for carrying out the error correcting process for the decision information obtained by the dividing unit, whereby the error corrected decision information is sent to the optimum controlling unit.

According to yet another aspect of the present invention, the receiver device further comprises a post-processing filter disposed at a latter stage of the adaptive decoding unit, wherein the parameter of the post-processing filter is varied according to the parameter of the adaptive decoding unit.

BRIEF DESCRIPTION OF THE DRAWINGS

Examples of coding transmission equipment in accordance with the present invention will be described with reference to the accompanying drawings, in which

Fig. 1 shows a prior art ADPCM coder;
Fig. 2 shows a prior art ADPCM decoder;
Fig. 3 shows an example of an ADPCM coder at a transmitter side of a coding transmission equipment to which the present invention may be applied;
Fig. 4 shows an example of an ADPCM decoder at a receiver side of a coding transmission equipment to which the present invention may be applied;
Fig. 5 shows an adaptive differential coding unit of the ADPCM coder of Fig. 3 in more detail;
Fig. 6 shows an embodiment of the ADPCM coder according to the present invention;
Fig. 7 shows a further embodiment of the coding transmission equipment according to the present invention;
Fig. 8 shows an example of an error correcting code;
Fig. 9 shows a format of the transmission signal including the error correcting code;
Fig. 10 shows an example of an error correction at the receiver side;
Fig. 11 shows still another embodiment of the ADPCM decoder at the receiver side according to the present invention; and

Fig. 12 is a view for explaining a post-processing filter in detail.

## DESCRIPTION OF THE PREFERRED EMBODIMENTS

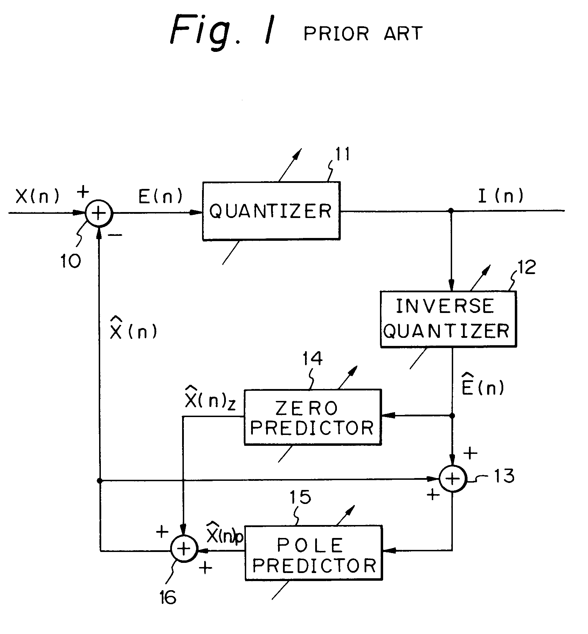

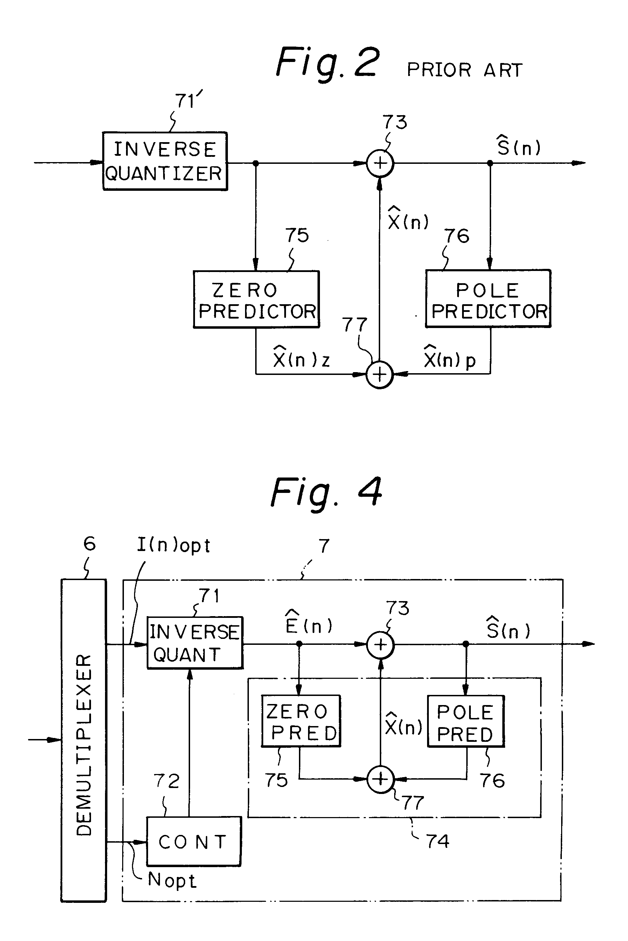

For a better understanding of the preferred embodiment, the problems in the prior art will be first explained with reference to Figs. 1 and 2.

Figure 1 shows an adaptive differential coder on the transmitter side in a prior art low bit rate coding transmission equipment for a voice signal. In Fig. 1, the coder comprises a subtractor 10 for calculating a prediction error E(n) corresponding to a difference between an input voice signal X(n) and a predicted value $\hat{X}(n)$ to be output; an adaptive quantizer 11 for adaptive quantizing of the prediction error E(n) to output the quantized value I(n) as a transmission signal; an adaptive inverse quantizer 12 for adaptive inverse quantizing of the quantized value I(n); an adder 13 for adding the inverse quantized value $\hat{E}(n)$ of the prediction error E(n) from the inverse quantizer 12 and the predicted value $\hat{X}(n)$; an adaptive zero predictor 14 for producing a zero predicted value $\hat{X}(n)_z$; an adaptive pole predictor 15 for producing a pole predicted value $\hat{X}(n)_p$; and an adder 16 for adding the zero predicted value $\hat{X}(n)_z$ and the pole predicted value $\hat{X}(n)_p$ to produce the predicted value $\hat{X}(n)$.

In this adaptive differential coder, the quantizer 11, the inverse quantizer 12, the zero predictor 14, and the pole predictor 15 are adaptive-controlled. For example, in the quantizer 11 and the inverse quantizer 12, the adaptive quantization wherein the quantizing step size $\Delta(n)$ is updated according to the following formula is carried out.

$$\Delta(n+1) = \Delta(n)^\gamma \times M(I(n)) \qquad (1)$$

where, $\gamma$ is a coefficient for gradually reducing the influence of the line error, which has a value close to and lower than 1; and M(I(n)) is a step size updating coefficient (or a step size updating speed).

When the quantized value I(n) from the quantizer 11 is, for example, a 1 bit output signal, the updating coefficient M(I(n)) assumes a value $\alpha$ close to and lower than 1, for example, $\alpha = 0.93$, when the quantized value I(n) is "0", and a value $\beta$ close to and higher than 1, for example, $\beta = 1.31$, when the quantized value I(n) is "1". Also, when the quantized value I(n) is a plurality bit output signal, the step size updating coefficient M(I(n)) is increased in proportion to the increment of the number indicated by the plurality bit output signal.

Figure 2 shows an adaptive differential decoder on the receiver side in a prior art low bit rate coding transmission equipment.

In Fig. 2, the decoder comprises an inverse quantizer 71', an adder 73, a zero predictor 75, a pole predictor 76, and an adder 77.

In this decoder, the quantized value I(n) of the prediction error transmitted from the transmitter side is inverse-quantized by the inverse quantizer 71 to recover the prediction error, and the zero predicted value $\hat{X}(n)_z$ and the pole predicted value $\hat{X}(n)_p$ are produced by the zero predictor 75 and the pole predictor 76 on the basis of the recovered past prediction errors respectively. Then, the predicted value $\hat{X}(n)$ obtained by adding this zero predicted value $\hat{X}(n)_z$ and the pole predicted value $\hat{X}(n)_p$ by the adder 73 is added to the inverse-quantized prediction error from the inverse quantizer 71' by the adder 73, to recover the voice signal $\hat{S}(n)$. The processing characteristics of the inverse quantizer 71', the zero predictor 75, and the pole predictor 76 at the receiver side are the same as that of the inverse quantizer 12, the zero predictor 14, and the pole predictor 15 at the transmitter side, respectively.

In the differential coder of Fig. 1, the step size updating coefficient M(I(n)) of the quantizer 11 and the inverse quantizer 12 is a fixed value, since the values $\alpha$ and $\beta$ which determine the updating coefficient M(I(n)) are fixed. Therefore, sometimes the optimum quantization is not carried out at the quantizer 11, since updating coefficient M(I(n)) of the step size $\Delta(n)$, which is a threshold for quantizing the prediction error E(n), may not sufficiently follow the change of the prediction error E(n).

In particular, when the input signal is a voice signal, the nature of the signal, for example, a voiced sound, unvoiced sound, or silence, changes from moment to moment and frequently varies, and therefore, the optimum quantization is not carried out since the fixed step side updating coefficient M(I(n)) cannot follow the change of the voice signal.

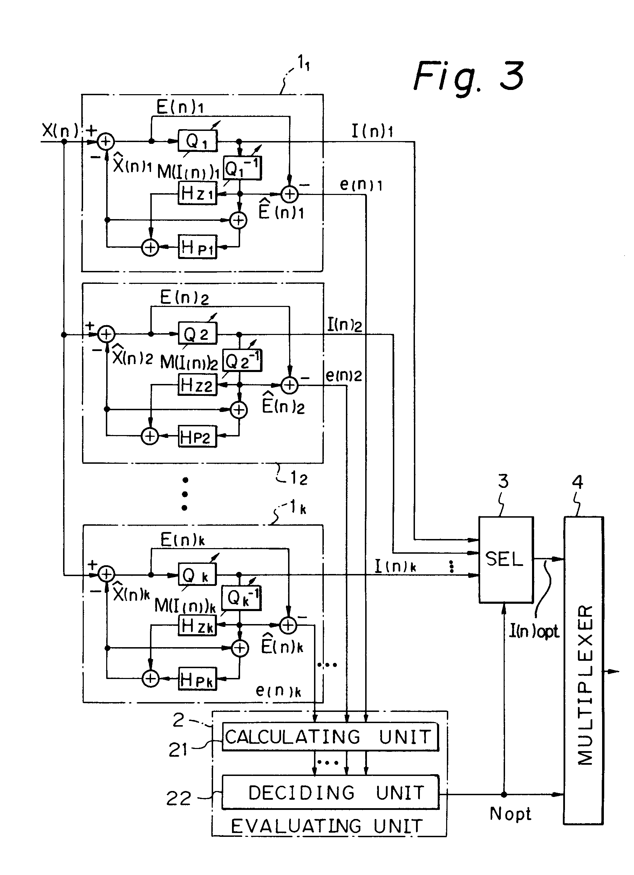

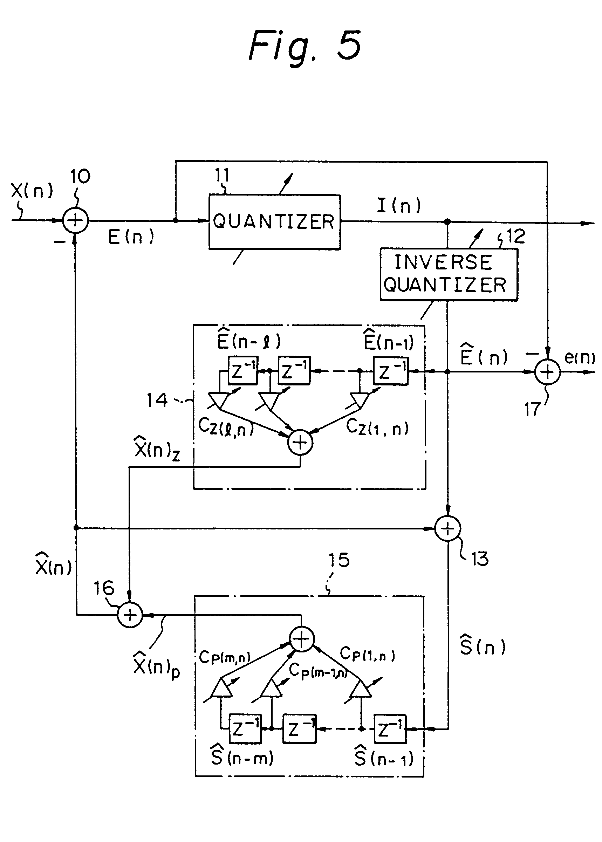

An example of an ADPCM coder, to which the present invention may be applied, will now be explained with reference to Figs. 3 to 5. Figures 3 to 5 show an example of the coding transmission equipment to which the present invention may be applied and which is adapted to transmission equipment using the ADPCM coding system. Figure 3 shows an ADPCM coder at the transmitter side, and Fig. 4 shows an ADPCM decoder at the receiver side.

4

In Fig. 3, $1_1$ to $1_k$ are the k numbers of adaptive differential coding units in which the step size updating coefficients $M(I(n))_1$ to $M(I(n))_k$ of quantizers (in more detail, values $\alpha$ and $\beta$ described above) are different, respectively. The fundamental structure is the same as the adaptive differential coder shown in Fig. 1, except that a subtractor is provided which calculates and outputs a quantization error e(n) corresponding to a differential value between the prediction error E(n) and the inverse-quantized value $\hat{E}(n)$ of the prediction error E(n) from the inverse quantizer 12.

Figure 5 shows a more detailed structure of one of the adaptive differential coding units $1_1$ to $1_k$. In Fig. 5, the subtractor 10 calculates the prediction error E(n) corresponding to the differential value between the input voice singal X(n) and the predicted value $\hat{X}(n)$ and sends this prediction error E(n) to the adaptive quantizer 11. The adaptive quantizer 11 quantizes the prediction error E(n) and outputs a quantized value I-(n). This quantized value I(n) is introduced to the inverse quantizer 12, which carries out the inverse quantization. At the same time, the quantized value I(n) is transmitted to the receiver side. The inverse quantized value $\hat{E}(n)$ of the prediction error E(n) from the inverse quantizer 12 is introduced to the zero predictor 14 and the subtractor 17, and to the pole predictor 15 via the adder 13. The zero predictor 14 produces a zero predicted value $\hat{X}(n)_z$ , and the pole predictor 15 produces a pole predicted value $\hat{X}(n)_p$. The zero predicted value $\hat{X}(n)_z$ and the pole predicted value $\hat{X}(n)_p$ are added by the adder 16 to produce a predicted value $\hat{X}(n)$, which is then sent to the subtractor 10. The subtractor 17 calculates the differential value between the prediction error E(n) and the inverse quantized value $\hat{E}(n)$ thereof, and outputs the result as a quantization error e(n).

The quantizer 11 and the inverse quantizer 12 are adaptive controlled type devices, and the quantizing step size $\Delta(n)$ is updated by the quantizing step adapter (not shown) according to the formula (1) described previously. This quantizing step size $\Delta(n)$ is a parameter for deciding inner conditions of the quantizer 11 and the inverse quantizer 12.

The zero predictor 14 and the pole predictor 15 are also adaptive control type devices, and are constituted by circuits comprising taps (time delay elements) and coefficient multipliers, having the orders $\ell$ and m, respectively. The zero predictor 14 and the pole predictor 15 hold prediction coefficients updated in sequence, and from the viewpoint of the transfer function as a filter, hold tap data containing past records.

That is, in the zero predictor 14, zero prediction coefficients $C_z(1, n) \sim C_z(\ell, n)$ of each coefficient multiplier are updated by the prediction coefficient adapter (not shown) according to the following formula, respectively.

$$C_z(i, n+1) = L_z \times C_z(i, n) + D_z \times \text{sgn}(\hat{E}(n)) \times \text{sgn}(\hat{E}(n-i)) \quad \ldots \ (2)$$

where, $L_z$ and $D_z$ are constant, and sgn( ) is a signature function which indicates a signature of "+" or "-".

The zero prediction coefficients $C_z(1, n)$ to $C_z(\ell, n)$ and tap datas E(n-1) to E(n-$\ell$) stored at each tap are parameters for determining the inner condition of the zero predictor 14.

Also, in the pole predictor 15, pole prediction coefficients $C_p(\ell, n)$ to Cp(m, n) of each coefficient multiplier are updated by the prediction coefficient adapter (not shown) according to the following formula, respectively.

$$C_p(i, n+1) = L_p \times C_p(i, n) + D_p \times \text{sgn}(E(n)) \times \text{sgn}(S(n-i)) \quad \ldots \ (3)$$

where, $L_p$ and $D_p$ are constant.

The pole prediction coefficients $C_p(1, n)$ to $C_p(m, n)$ and tap data $\hat{S}(n-1)$ to $\hat{S}(n-m)$ stored at each tap are the parameters for determining the inner condition of the pole predictor 15.

In Fig. 3, each component of Fig. 5 is represented in such a manner that the quantizer 11 is represented by $Q_1$ to $Q_k$ , the inverse quantizer 12 by $Q_1^{-1}$ to $Q_k^{-1}$, the zero predictor 14 by $H_{z1}$ to $H_{zk}$ , and the pole predictor 15 by $H_{p1}$ to $H_{pk}$ , respectively.

In Fig. 3 quantization errors $e(n)_1$ to $e(n)_k$ are introduced to an evaluating unit 2. The evaluating unit 2 comprises a quantization error power calculating unit 21 and an optimum quantization deciding unit 22. The calculating unit 21 calculates powers of the quantization errors $e(n)_1$ to $e(n)_k$ , sample by sample respectively, during one frame of the voice signal X(n) (for example, 16 samples), and integrates them,

5

respectively, at each frame, then outputs the summed powers of each of the quantization errors $e(n)_1$ to $e(n)_k$ at the end of the frame to the deciding unit 22. The deciding unit 22 decides the optimum coding unit 1 opt, which carries out the optimum quantization, among the adaptive differential coding units $1_1$ to $1_k$, by selecting the minimum calculated quantization error power from that of the quantization errors $e(n)_1$ to $e(n)_k$. Then, the deciding unit 22 outputs an optimum coder number signal Nopt, indicating the number of the optimum coding unit 1 opt decided as aforementioned, to a selector 3 and a multiplexer 4.

The quantized values $I(n)_1$ to $I(n)_k$ from adaptive differential coding units $1_1$ to $1_k$ are introduced to the selector 3, respectively. This selector is constituted by a memory such as a RAM, which can store quantized values $I(n)_1$ to $I(n)_k$ of one frame. When the coder number signal Nopt is received at the end of one frame, the selector 3 sends one frame of the optimum quantized value $I(n)_{opt}$ of the optimum coding unit 1 opt, which is selected by using the coder number signal Nopt, as an address to the multiplexer 4. The multiplexer 4 adds the coder number signal Nopt from the evaluating unit to the optimum quantized value $I(n)$opt, and transmits a multiplexed signal to the receiver side after converting the signal to a transmission line code.

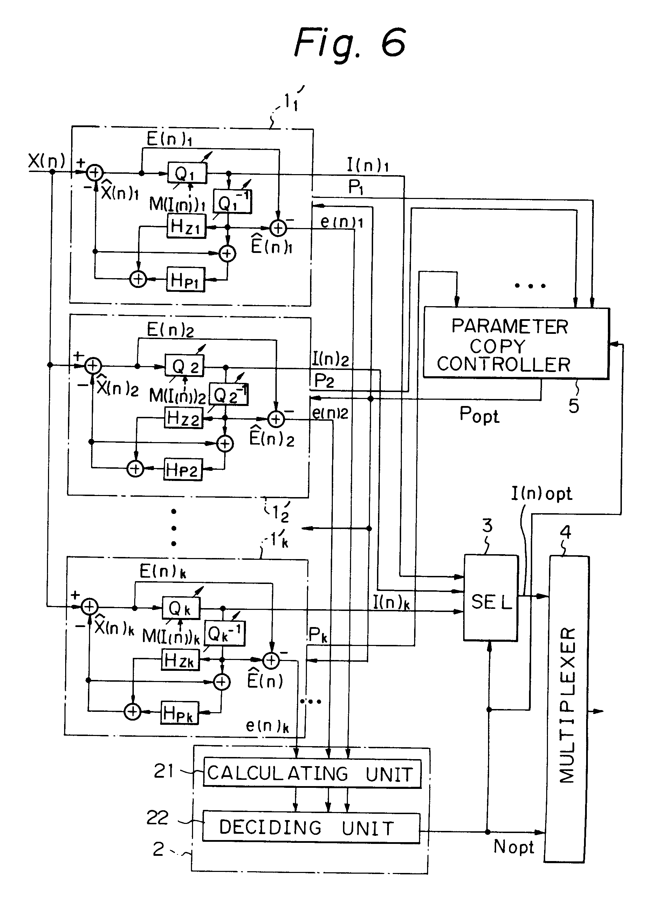

In the receiver of Fig 4, 6 is a demultiplexer, and 7 a decoder. The decoder 7 comprises an adaptive inverse quantizer 71; a controller 72 capable of controlling the step size updating coefficient $M(I(n))$ of the inverse quantizer 71; an adaptive predictor 74 constituted by a zero predictor 75, a pole predictor 76, and an adder 77; and an adder 73.

The operation of the above described coding transmission equipment is explained hereinafter.

The voice signal $X(n)$ is input to each of adaptive differential coding units $1_1$ to $1_k$ in parallel, an adaptive differential coding process is carried out at each unit, and the quantized values $I(n)_1$ to $I(n)_k$ and the quantization errors $e(n)_1$ to $e(n)_k$ are output. The quantization error power calculating unit 21 calculates the power of the input quantization errors $e(n)_1$, to $e(n)_k$ frame by frame, respectively, then sends the calculated results to the optimum quantization deciding unit 22. The deciding unit 22 decides the optimum coding unit 1 opt for outputting the quantization error $e(n)$, having a minimum quantization error power, which carries out the optimum quantization and then sends the coder number signal Nopt indicating the coder number of the decided optimum coding unit 1 opt to the selector 3 and the multiplexer 4.

In response to this coder number signal Nopt, the selector 3 sends one frame of the optimum quantized value $I(n)$opt of the optimum coding unit 1opt indicated by the coder number signal Nopt to the multiplexer 4. The multiplexer 4 adds the coder number signal Nopt to the optimum quantized value $I(n)$opt and transmits the multiplexed signal to the receiver side.

In the receiver side, the received signal is divided into the quantized value $I(n)$opt of the prediction error $E(n)$ and the coder number signal Nopt, and input to the inverse quantizer 71 and the controller 72, respectively. The inverse quantizer 71 inverse-quantizes the quantized value $I(n)$ opt to obtain the inverse quantized prediction error $\hat{E}(n)$, then sends the inverse-quantized prediction error $\hat{E}(n)$ to the adder 73. The adder 73 adds the inverse-quantized prediction error $\hat{E}(n)$ and the predicted value $\hat{X}(n)$ predicted by the predictor 74 on the basis of past recovered voice signals to recover the current voice signal $\hat{S}(n)$. The predictor 74 carries out the adaptive prediction according to the output signal of the inverse quantizer 71.

On the other hand, the controller 72 controls the step size updating coefficient $M(I(n))$ of the inverse quantizer 71 to coincide with the step size updating coefficient $M(I(n))$opt of the optimum coding unit 1 opt selected as the coding unit carrying out the optimum quantization for a relevant frame at the transmitter side. That is, the controller 72 reads out the step size updating coefficient $M(I(n))$ from a ROM by using the coder number signal Nopt as an address, then sends it to the inverse quantizer 71, and an inverse quantization step adapter in the inverse quantizer 71 changes the updating coefficient $M(I(n))$.

As described above, in the coding transmission equipment to which the present invention may be applied, the coder of the transmitter side selects the optimum coding unit which carries out the optimum quantization from among a plurality of adaptive differential coding units having different step size updating coefficients, then transmits the quantized value thereof with the coding unit number, and the decoder of the receiver side recovers the original voice signal from the received quantized value by using the optimum step size updating coefficient indicated by the received coding unit number, whereby an improvement of the quantity of the recovered voice signal is achieved.

The means for changing the optimum updating coefficient $M(I(n))$ in accordance with the received coder number signal Nopt at the receiver side is not limited to the above described example. The receiver can have a plurality of inverse quantizers having different step size updating coefficients corresponding to those of the transmitter side, and can recover the voice signal by selecting the optimum inverse quantizer by the selector according to the received coder number signal. Also the receiver can have a plurality of decoders having difference processing characteristics corresponding to each coding unit at the transmitter side, and can select the optimum decoder according to the received coder number signal.

Figure 6 shows an embodiment of the coder according to the present invention. This coder is improved so that a better quality recovered voice signal is obtained at the receiver side in comparison with the coder of Fig 3.

The quantizer, the inverse quantizer, the zero predictor, and the pole predictor in each adaptive differential coder $1_1$ to $1_k$ are adaptive controlled, and therefore, the parameters deciding the inner condition of the coding unit, for example, the quantization step size $\Delta(n)$ of the quantizer and the inverse quantizer and the prediction coefficient and tap data of the predictor, etc., vary successively at each of the differential coding units $1_1$ to $1_k$ according to the processing procedure of the input signal, and become different at each differential coding unit.

Accordingly, when the prior selected differential coding unit is changed to the other differential coding unit currently selected at a boundary between frames, in order to select the optimum differential coding unit, the aforementioned parameter of the prior selected coding unit and that of the currently selected coding unit are different. As a result, when the differential coding unit is switched, a discontinuity in the process of the input signal arises at the boundary between frames due to the difference between these parameters, therefore the discontinuity of the recovered signal also arises at the boundary between frames in the receiver side, and thus the recovered voice has a poor quality. The coder shown in Fig. 6 is intended to solve this problem.

The difference between the coder of Fig. 6 and the coder of Fig. 3 is that the coder of Fig. 6 is provided with a parameter copy controller 5. That is, parameters $P_1$ to $P_k$ from the differential coding units $1_1'$ to $1_k'$, which parameters determine the inner condition of the coding unit, and the coder number signal Nopt from the evaluating unit 2 are input to the parameter copy controller 5. Here, parameters $P_1$ to $P_k$ are quantizing step sizes $\Delta(n)_1$ to $\Delta(n)_k$, zero prediction coefficients $C_{z1}$ to $C_{zk}$, pole prediction coefficients $C_{p1}$ to $C_{pk}$, tap datas $E_1$ to $E_k$, and tap datas $S_1$ to $S_k$. The parameter copy controller 5 selects the parameter Popt of the optimum coding unit 1opt according to the coder number signal Nopt and then sends it to all of the differential coding units $1_1'$ to $1_k'$.

The operation of the coder shown in Fig. 6 will be explained below.

The optimum coding unit 1opt is decided by the evaluating unit at the end of one frame of the voice signal X(n), and then the coder number signal Nopt is sent to the selector 3, the multiplexer 4, and the parameter copy controller 5. The selector 3 sends one frame of the quantized value I(n)opt of the optimum coding unit 1opt indicated by the signal Nopt to the multiplexer 4, and the multiplexer 4 then transmits this optimum quantized value I(n)opt with the coder number signal Nopt to the receiver side.

On the other hand, the parameter copy controller 5 selects the optimum parameter Popt of the optimum coding unit 1 opt corresponding to the coder number signal Nopt from among the input parameters $P_1$ to $P_k$, and then sends that parameter Popt to all of the differential coding units $1_1'$ to $1_k'$. Accordingly, all of the adaptive differential coding units copy the received optimum parameter Popt as an own parameter at the end of one frame.

That is, at each adaptive differential coding unit, the quantizing step size $\Delta(n)$opt is written in the quantizer 11 and the inverse quantizer 12, the zero prediction coefficient Cz.opt and the tap data $\hat{E}$opt are written in the coefficient multiplier of the zero predictor 14 and the tap thereof, respectively, and the pole prediction coefficient Cp.opt and the tap data Sopt are written in the coefficient multiplier of the pole predictor 15 and the tap thereof, respectively.

As a result, all of the adaptive differential coding units $1_1'$ to $1_k'$ have the same inner condition as that of the currently selected adaptive differential coding unit 1' opt at the time of starting the next frame. Accordingly, when, for example, the adaptive differential coding unit $1_1'$ is selected as the optimum coding unit at current frame and then the adaptive differential coding unit $1_2'$ is selected at next frame, the parameter $P_1$ of the differential coding unit $1_1'$ at the end point of the current frame coincides with the parameter $P_2$ of the differential coding unit $1_2'$ at the starting point of the next frame, and therefore, no discontinuity arises at the boundary between the current and next frames.

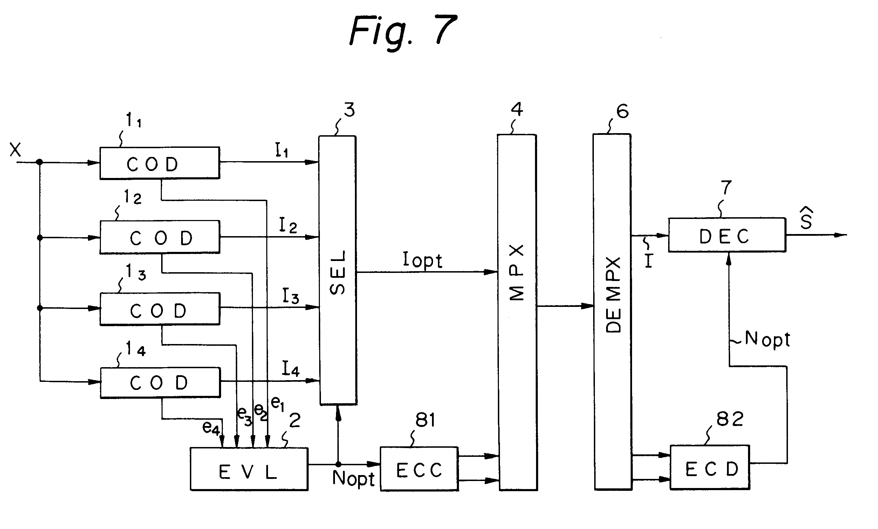

Figure 7 shows a further embodiment of the present invention. In the coding transmission equipment shown in Figs. 3 to 6, if the coder number signal Nopt indicating the optimum coding unit number is erroneous, the influence of the error extends over several frames, and thus the recovered voice at the receiver side has a poor quality. The equipment of Fig. 7 is intended to solve this problem.

That is, the transmission equipment of Fig. 7 is provided with an error correction circuit for correcting the error arising in the transmitted optimum coder number signal Nopt.

In Fig. 7, the coder number signal from the evaluating unit 2 is input to the multiplexer 4 via an error correcting coder 81, and then transmitted to the receiver side. On the other hand, at the receiver side, the coder number signal Nopt divided by the demultiplexer 6 is input, via an error correcting decoder 82, to the decoder 7, wherein the signal Nopt is input to the controller 72 as shown in Fig. 4 for controlling the updating coefficient M(I(n)) of the inverse quantizer. The error correcting coder 81 and the error correcting decoder 82 carry out the error correction as follows.

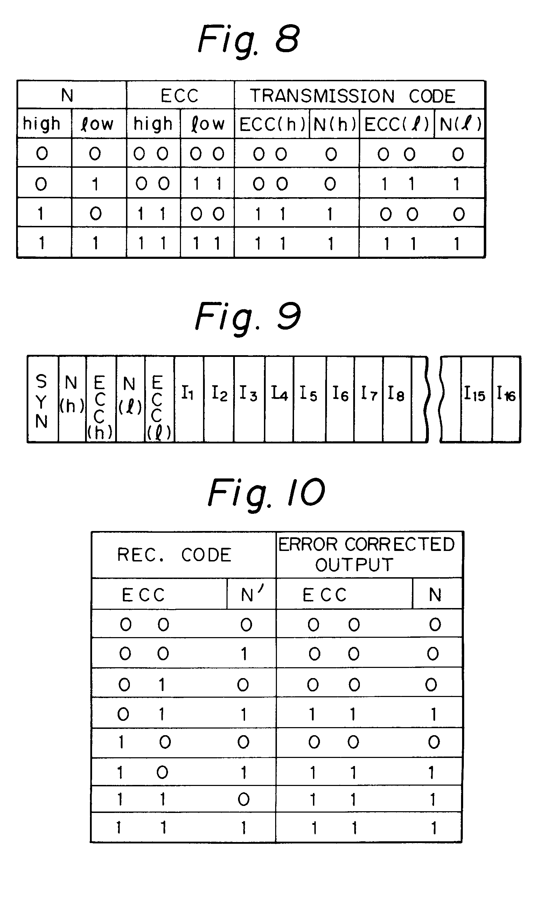

First, in this example, the number of differential coding units is four, and each coding unit is given the coder numbers "00", "01", "10", and "11". Figure 8 shows an example of an error coding code, Fig. 9 shows a format of one frame of the transmission signal, and Fig. 10 shows an example of an error correction at the receiver side.

As shown in Fig. 8 the error correcting code ECC is obtained by converting "0" and "1" of each digit of the coder number into "00" and "11" respectively. The transmission code is configured by arranging the high order digit error correcting code ECC(h) of the coder number, the high order digit N(h) thereof, the low order digit error correcting code ECC(ℓ) the coder number, and the low order digit N(ℓ) thereof, in sequence. Therefore, the coder number constituted by two digits is converted into the transmission code constituted by six digits and transmitted to the receiver side.

In the receiver side, the error correcting decoder 82 decides whether each of the high and low order digits of the received transmission code is "0" or "1" by a majority of "0" and "1" thereof, and corrects all digits of each of the high and low order digit of the received transmission code to "000" or "111" according to the majority decision, thereby recovering the correct high and low order of the digits of the coder number.

For example, Fig. 10 shows the error correction of high order digits of the received transmission code at the receiver side. As shown in Fig. 10, "001", "010", and "100" of the high order digits wherein "1" may be erroneous are corrected to "000". Also, "011", "101", and "110" wherein "0" may be erroneous are corrected to "111".

Various kinds of error correcting codes are known, and a suitable error correcting code may be adopted according to the number of differential coding units and kind of coder number to be transmitted, etc.

Assuming that a sampling frequency of the input voice signal is 6.4 kHz, and the quantized value code of the prediction error is 2 bits at each sample point, an example of a bit allocation of the frame which transmits the quantized value codes of 16 sample points will be explained below.

One frame is constituted by 39 bits wherein 32 bits are the quantized value codes, each of which is 2 bits of 16 samples, 2 bits are the coder number, and 4 bits are error correcting codes ECC(h) & ECC(ℓ). Each frame is transmitted during 2.5 ms (= 1/400 sec) corresponding to a 16 sample period at a sampling frequency of 6.4 KHz, therefore the transmission rate is 15.6 Kbit/sec.

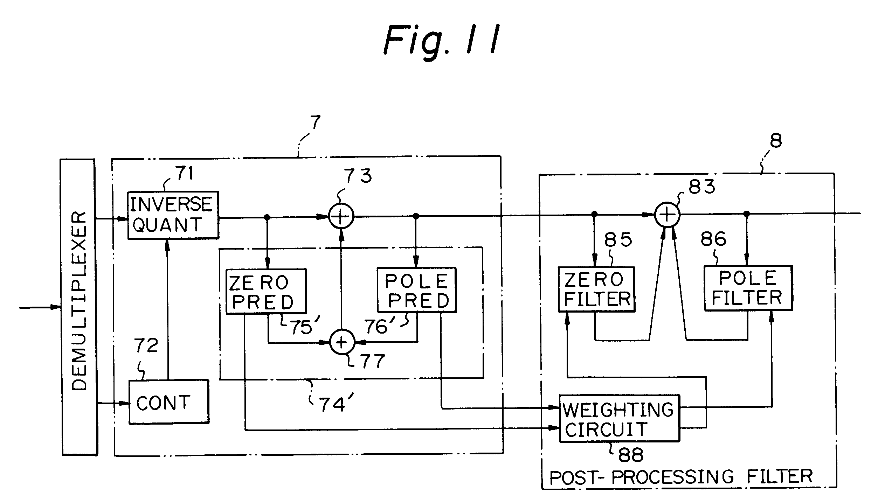

Figure 11 shows still another embodiment of the receiver side of the coding transmission equipment according to the present invention. The difference between the example of Fig. 5 and this embodiment of Fig. 11 is that here a post-processing filter is provided. The post-processing filter carries out the signal process of the decoded signal in order to improve an auditory sense of the recovered voice. This post-processing filter is disclosed in a paper entitled "Enhancement of ADPCM Speech by Adaptive Post-filtering" by V. Ramamoorthy & N.S. Jayant, published at the "ICC '85" held in the USA. According to this paper, when a transfer function A(z) of the pole predictor 76 of the predictor 74 and a transfer function B(z) of the zero predictor 75 thereof are as follows,

$$A(z) = \sum_{j=1}^{2} a_j z^{-j}$$

$$B(z) = \sum_{j=1}^{6} b_j z^{-j}$$

a transfer function A'(z) of a pole post-processing filter 86 of the post-processing filter 8 and a transfer function B'(z) of a zero post-processing filter 85 is assumed to be as follows.

$$A'(z) = \sum_{j=1}^{2} \alpha^{j} \cdot a_{j} z^{-j}$$

$$B'(z) = \sum_{j=1}^{6} \beta^{j} \cdot b_{j} z^{-j}$$

$$( 0 \leq \alpha \leq 1, \ 0 \leq \beta \leq 1)$$

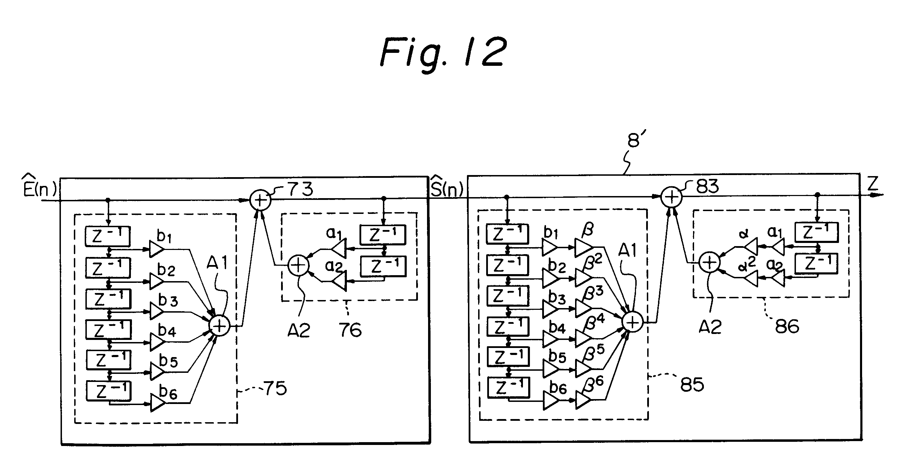

The principal structure of the predictor 74 and the post-processing filter 8 disclosed in this paper is shown in Fig. 12. In Fig. 12, the reference symbols of the coefficient multipliers denote the coefficients thereof, respectively, for simplification of the explanation.

The predictor of the decoder 7 shown at left side of Fig. 12 comprises the zero predictor 75 including six time delay elements $Z^{-1}$, six coefficient multipliers $b_1$ to $b_6$ , and an adder A1 adding output signals of multipliers $b_1$ to $b_6$ , which realizes the transfer function B(z), and the pole predictor 76 comprising two time delay elements $Z^{-1}$, two coefficient multipliers $a_1$ and $a_2$ , and an adder A2 adding output signals of the multipliers $a_1$ and $a_2$ , which realizes the transfer function A(z). Output signals of the zero predictor 75 and the pole predictor 76 are added to the signal E(n) obtained by inverse quantizing the quantized value from the transmitter side at the inverse quantizer 71 (Fig. 11) by the adder 73, to obtain the recovered voice signal S(n).

A block at the right side in Fig. 12 is a post-processing filter 8', which comprises a zero post-processing filter 85, a pole post-processing filter 86, and an adder 83. The zero post-processing filter 85 is further provided with $\beta$ coefficient multipliers $\beta$ and $\beta^2$ to $\beta^6$ inserted between coefficient multipliers $b_1$ to $b_2$ and the adder A1, respectively, in comparison with the zero predictor 75 in order to carry out the operation of $\beta$ coefficient which is a power of $\beta$.

The pole post-processing filter is provided with $\alpha$ coefficient multiplier $\alpha$ and $\alpha^2$ inserted between coefficient multipliers $a_1$ and $a_2$ and the adder A2, respectively, in comparison with the pole predictor 76. Output signals of post-processing filters 85 and 86 are added to the recovered voice output $\hat{S}(n)$ at the adder 83, whereby the auditory sense of the recovered output is improved, and then output as an improved output Z.

The aforementioned coefficients $b_1$ to $b_6$ , $a_1$ and $a_2$ are updated to adapt to the input signal, and must have the same values at the predictor and the post-processing filter. Also, the coefficients $\alpha$ and $\beta$ at the post-processing filter are updated to adapt to the input signal.

In Fig. 11, the post-processing filter 8, such as the filter shown in Fig. 12, is disposed at the output side of the decoder 7. This post-processing filter 8 is provided with a coefficient weighting circuit 88 for controlling the coefficients $\alpha$ and $\beta$ of the zero and pole post-processing filters 85 and 86.

The coefficients of the coefficients multipliers $b_1$ to $b_6$ of the zero post-processing filter 85 and the coefficient multipliers $a_1$ and $a_2$ of the pole post-processing filter 86 are kept at the same values as those of the coefficients $b_1$ to $b_6$ of the zero predictor 75' and coefficients $a_1$ and $a_2$ of the pole predictor 76', respectively, by the coefficient weighting circuit 88. Also, the power coefficient $\beta$ of the zero post-processing filter 85 and the power coefficient $\alpha$ of the pole post-processing filter 86 are adjusted to suitable values for carrying out a suitable post-processing by the coefficient weighting circuit 88. The coefficients $\alpha$ and $\beta$ are set to a value between 0 to 1. Note in this example, $\alpha$ is 1.0 and $\beta$ is 0.2.

As described above, the recovered voice output having a further improved quality can be obtained by adding the post-processing filter having a characteristic which is changed according to the characteristic of the adaptive differential coding unit at the transmitter side.

In the embodiments explained hereinbefore, the present invention is applied to the ADPCM system. But, of course, the present invention is not limited to the ADPCM system, namely, the present invention may be adapted to systems wherein the adaptive quantization is carried out as, for example, APCM (Adaptive Pulse Code Modulation), ADM (Adaptive Delta Modulation), SBC (Sub Band Coding), VRC (Variable Rate Coding), APC (Adaptive Predictive Coding), and ATC (Adaptive Transform Coding), etc.

**Claims**

1. Coding transmission equipment having a transmitter device and a receiver device, the transmitter device comprising:

a plurality of coding units ($l_1...l_k$) and an adaptive quantizer (11) for outputting a quantized value according to an input signal and an error calculating unit (17) for calculating the quantization error of the adaptive quantizer (11), each of said plurality of coding units ($l_1...l_k$) having different processing characteristics;

an evaluating unit (2) for deciding which is an optimum coding unit to carry out an optimum quantization from among said plurality of coding units ($l_1...l_k$) at every frame of an input signal; and

a sending unit (3,4) for selecting an optimum quantized value of said optimum coding unit ($l_1...l_k$) from among quantized values input from said plurality of coding units ($l_1...l_k$) respectively on the basis of a decision by said evaluating unit (2) and transmitting the optimum quantized value together with the decision information; and

the receiver device comprising:

a dividing unit (6) for dividing a received signal from the transmitter device into said quantized value and said decision information;

an adaptive decoding unit (7) for decoding the quantized value obtained by the dividing unit (6) into the original input signal; and

an optimum controlling unit (72) for controlling the processing characteristic of the adaptive decoding unit (7) to become an optimum processing characteristic according to the decision information obtained by the dividing unit (6),

**characterized by**, in said transmitter device:

said coding units ($l_1...l_k$) being adaptive coding units each adaptive coding unit ($l_1...l_k$) having a different adaptive quantizer processing characteristic, said evaluating unit (2) deciding on the optimum adaptive coding unit ($l_1...l_k$) on the basis of quantization errors input from said plurality of adaptive coding units ($l_1...l_k$), respectively, a parameter copy unit (5) in which parameters for determining an inner condition of said adaptive coding units ($l_1...l_k$) are input from all of said plurality of adaptive coding units ($l_1...l_k$), and an optimum parameter of an optimum adaptive coding unit ($l_1...l_k$) is selected and sent to other adaptive coding units ($l_1...l_k$) at every frame according to a decision by the evaluating unit (2); and

each of said other adaptive coding units ($l_1...l_k$) starting a signal process for a next frame after copying said optimum parameter sent from said parameter copy unit (5) as an own parameter.

2. Coding transmission equipment according to claim 1, wherein the transmitter device further comprises an error correction coding unit (81) for carrying out an error correction coding process to the decision information from the evaluating unit (2), whereby the decision information processed by the error correction coding is sent to the receiver device;

the receiver device further comprising an error correcting unit (82) for carrying out the error correcting process to the decision information divided by the dividing unit (6) whereby the error corrected decision information is sent to the optimum controlling unit (72).

3. Coding transmission equipment according to claim 1, wherein the receiver device further comprises a post-processing filter (8) disposed at a latter stage of the adaptive decoding unit (7) and wherein the parameter of the post-processing filter (8) is varied according to the parameter of the adaptive decoding unit (7).

4. Coding transmission equipment according to claim 1, wherein the difference of the processing characteristic between the plurality of adaptive coding units ($l_1...l_k$) is the difference of quantization step size updating coefficients between the adaptive quantizers (11).

5. Coding transmission equipment according to claim 1, wherein the adaptive coding unit ($l_1...l_k$) is an adaptive differential pulse code modulation coder.

6. Coding transmission equipment according to claim 1, wherein the adaptive coding units ($l_1...l_k$) comprise a subtractor (10) for calculating a prediction error corresponding to a difference between an input signal and a predicted value, said adaptive quantizer (11) for adaptive quantizing the prediction error, an adaptive inverse quantizer (12) for adaptive inverse quantizing of a quantized value from the adaptive quantizer (11), a predictor (14,15,16) for calculating the predicted value on the basis of past output signals from the adaptive inverse quantizer and an error calculating unit (17) for calculating a quantization error corresponding to a differential value between a prediction error and an inverse quantized value from said inverse quantizer (12).

10

7. Coding transmission equipment according to claim 6, wherein the predictor (14,15,16) includes a zero predictor (14) and a pole predictor (15).

8. Coding transmission equipment according to claim 4, wherein the inner parameter of the adaptive coding unit $(l_1...l_k)$ to be copied by the parameter copy unit (5) is a quantization step size updating coefficient.

9. Coding transmission equipment according to claim 8, wherein the inner parameter to be copied further includes tap data and a prediction coefficient of said predictor (14,15,16).

10. A transmitter device adapted to a coding transmission equipment for carrying out coding with an adaptive quantization, comprising:

a plurality of coding units $(l_1...l_k)$ and an adaptive quantizer (11) for outputting a quantized value according to an input signal and an error calculating unit (17) for calculating a quantization error of the adaptive quantizer (11) wherein each of said plurality of coding units $(l_1...l_k)$ has a different processing characteristic;

an evaluating unit (2) for deciding which is an optimum coding unit $(l_1...l_k)$ to carry out an optimum quantization from among said plurality of coding units $(l_1...l_k)$ at every frame of an input signal, and

a sending unit (3,4) for selecting an optimum quantized value of said optimum coding unit $(l_1...l_k)$ from among quantized values input from said plurality of coding units $(l_1...l_k)$ respectively on the basis of a decision by an evaluating unit (2) and transmitting an optimum quantized value together with the decision information,

characterized by

said coding units $(l_1...l_k)$ being adaptive coding units, each adaptive coding unit $(l_1...l_k)$ having a different adaptive quantizer processing characteristic, said evaluating unit (2) deciding on the optimum adaptive coding unit $(l_1...l_k)$ on the basis of quantization errors input from said plurality of adaptive coding units $(l_1...l_k)$ respectively;

a parameter copy unit (5) in which parameters for determining an inner condition of said adaptive coding unit $(l_1...l_k)$ are input from all of said plurality of adaptive coding units $(l_1...l_k)$ and an optimum parameter of said optimum adaptive coding unit $(l_1...l_k)$ is selected and sent to other adaptive coding units $(l_1...l_k)$ at every frame according to a decision by the evaluating unit (2); and

each of said other adaptive coding units $(l_1...l_k)$ starting a signal processing of a next frame after copying the optimum parameter sent from the parameter copy unit (5) as an own parameter.

11. A transmitter device according to claim 10, wherein a difference between processing characteristics of said plurality of adaptive coding units $(l_1...l_k)$ is the difference between quantization step size updating coefficients of said adaptive quantizers (11).

12. A transmitter device according to claim 10, wherein the adaptive coding unit $(l_1...l_k)$ is an adaptive differential pulse code modulation coder.

13. A transmitter device according to claim 10, wherein said adaptive coding unit $(l_1...l_k)$ comprises a subtractor (10) for calculating a prediction error corresponding to a difference between an input signal and a predicted value, said adaptive quantizer (11) for adaptive quantizing of said prediction error, an adaptive inverse quantizer (12) for adaptive inverse quantizing of a quantized value from the adaptive quantizer (11), a predictor (14,15,16) for calculating a predicted value on the basis of a past output signal from the adaptive inverse quantizer (12) and an error calculating unit (17) for calculating a quantization error corresponding to a differential value between a prediction error and an inverse quantized value from the inverse quantizer (12).

14. A transmitter device according to claim 13, wherein the predictor (14,15,16) includes a zero predictor (14) and a pole predictor (15).

15. A transmitter device according to claim 11, wherein the inner parameter of the adaptive coding unit $(l_1...l_k)$ to be copied by the parameter copy unit (5) is a quantization step size updating coefficient.

16. A transmitter device according to claim 15, wherein the inner parameter to be copied further includes tap data and a prediction coefficient of the predictor (14,15,16).

11

**EP 0 206 352 B1**

**Revendications**

1. Equipement de transmission avec codage comportant un dispositif émetteur et un dispositif récepteur, le dispositif émetteur comprenant :

un ensemble d'unités de codage ($I_1$ ... $I_k$) et un quantificateur adaptatif (11) destiné à présenter en sortie une valeur quantifiée correspondant à un signal d'entrée, et une unité de calcul d'erreur (17) qui est destinée à calculer l'erreur de quantification du quantificateur adaptatif (11), chacune des unités de l'ensemble d'unités de codage ($I_1$ ... $I_k$) ayant des caractéristiques de traitement différentes;

une unité d'évaluation (2) qui est destinée à déterminer l'unité qui est une unité de codage optimale pour accomplir une quantification optimale, parmi l'ensemble d'unités de codage ($I_1$ ... $I_k$), à chaque trame d'un signal d'entrée; et

une unité d'émission (3, 4) destinée à sélectionner une valeur quantifiée optimale de l'unité de codage optimale ($I_1$ ... $I_k$), parmi les valeurs quantifiées respectives qui sont fournies par l'ensemble d'unités de codage ($I_1$ ... $I_k$), sur la base d'une décision prise par l'unité d'évaluation (2), et à émettre la valeur quantifiée optimale en compagnie de l'information de décision; et

le dispositif récepteur comprenant :

une unité de division (6) qui est destinée à diviser un signal reçu provenant du dispositif émetteur, pour donner la valeur quantifiée et l'information de décision;

une unité de décodage adaptative (7) qui est destinée à décoder la valeur quantifiée obtenue par l'unité de division (6), pour donner le signal d'entrée d'origine; et

une unité de commande optimale (72) qui est destinée à commander la caractéristique de traitement de l'unité de décodage adaptative (7) pour qu'elle devienne une caractéristique de traitement optimale, conformément à l'information de décision qui est obtenue par l'unité de division (6),

caractérisé en ce que, dans le dispositif émetteur :

les unités de codage ($I_1$ ... $I_k$) sont des unités de codage adaptatives, chaque unité de codage adaptative ($I_1$ ... $I_k$) ayant une caractéristique de traitement de quantificateur adaptatif différente, l'unité d'évaluation (2) détermine l'unité de codage adaptative ($I_1$ ... $I_k$) optimale sur la base d'erreurs de quantification qui proviennent respectivement de l'ensemble d'unités de codage adaptatives ($I_1$ ... $I_k$), il existe une unité de copie de paramètres (5) dans laquelle des paramètres pour la détermination d'une condition interne des unités de codage adaptatives ($I_1$ ... $I_k$) sont introduits à partir de toutes les unités de l'ensemble d'unités de codage adaptatives ($I_1$ ... $I_k$), et un paramètre optimal d'une unité de codage adaptative ($I_1$ ... $I_k$) optimale est sélectionné et émis vers d'autres unités de codage adaptatives ($I_1$ ... $I_k$), à chaque trame, conformément à une décision prise par l'unité d'évaluation (2); et

chacune des autres unités de codage adaptatives ($I_1$ ... $I_k$) commence un traitement de signal pour une trame suivante après avoir copié le paramètre optimal qui est émis par l'unité de copie de paramètres (5), sous la forme d'un paramètre propre à cette unité.

2. Equipement de transmission avec codage selon la revendication 1, dans lequel le dispositif émetteur comprend en outre une unité de codage de correction d'erreur (81) qui est destinée à accomplir un traitement de codage de correction d'erreur pour l'information de décision provenant de l'unité d'évaluation (2), après quoi l'information de décision traitée par le codage de correction d'erreur est émise vers le dispositif récepteur;

le dispositif récepteur comprenant en outre une unité de correction d'erreur (82) qui est destinée à accomplir le traitement de correction d'erreur pour l'information de décision qui résulte de la division effectuée par l'unité de division (6), après quoi l'information de décision dont l'erreur a été corrigée est émise vers l'unité de commande optimale (72).

3. Equipement de transmission avec codage selon la revendication 1, dans lequel le dispositif récepteur comprend en outre un filtre de post-traitement (8) qui est placé dans un étage final de l'unité de décodage adaptative (7), et dans lequel le paramètre du filtre de post-traitement (8) est modifié conformément au paramètre de l'unité de décodage adaptative (7).

4. Equipement de transmission avec codage selon la revendication 1, dans lequel la différence de la caractéristique de traitement entre l'ensemble d'unités de codage adaptatives ($I_1$ ... $I_k$), est la différence de coefficients d'actualisation de valeur de pas de quantification entre les quantificateurs adaptatifs (11).

5. Equipement de transmission avec codage selon la revendication 1, dans lequel l'unité de codage

12

adaptative ($I_1$ ... $I_k$) est un codeur de modulation par impulsions et codage de type différentiel adaptatif.

6. Equipement de transmission avec codage selon la revendication 1, dans lequel les unités de codage adaptatives ($I_1$ ... $I_k$) comprennent un soustracteur (10) qui est destiné à calculer une erreur de prédiction correspondant à une différence entre un signal d'entrée et une valeur prédite, le quantificateur adaptatif (11) pour la quantification adaptative de l'erreur de prédiction, un quantificateur adaptatif inverse (12) pour la quantification adaptative inverse d'une valeur quantifiée provenant du quantificateur adaptatif (11), un prédicteur (14, 15, 16) pour le calcul de la valeur prédite sur la base des signaux de sortie passés du quantificateur inverse adaptatif, et une unité de calcul d'erreur (17) qui est destinée à calculer une erreur de quantification correspondant à une valeur de différence entre une erreur de prédiction et une valeur résultant de la quantification inverse, qui provient du quantificateur inverse (12).

7. Equipement de transmission avec codage selon la revendication 6, dans lequel le prédicteur (14, 15, 16) comprend un prédicteur de zéro (14) et un prédicteur de pôle (15).

8. Equipement de transmission avec codage selon la revendication 4, dans lequel le paramètre interne de l'unité de codage adaptative ($I_1$ ... $I_k$) qui doit être copié par l'unité de copie de paramètres est un coefficient d'actualisation de valeur de pas de quantification.

9. Equipement de transmission avec codage selon la revendication 8, dans lequel le paramètre interne à copier comprend en outre des données de prises et un coefficient de prédiction du prédicteur (14, 15, 16).

10. Un dispositif émetteur adapté à un équipement de transmission avec codage qui est destiné à effectuer un codage avec une quantification adaptative, comprenant :

un ensemble d'unités de codage ($I_1$ ... $I_k$) et un quantificateur adaptatif (11) qui est destiné à présenter en sortie une valeur quantifiée correspondant à un signal d'entrée, et une unité de calcul d'erreur (17) qui est destinée à calculer une erreur de quantification du quantificateur adaptatif (11), chaque unité de l'ensemble d'unités de codage ($I_1$ ... $I_k$) ayant une caractéristique de traitement différente;

une unité d'évaluation (2) qui est destinée à déterminer l'unité qui est une unité de codage optimale ($I_1$ ... $I_k$) pour effectuer une quantification optimale, parmi l'ensemble d'unités de codage ($I_1$ ... $I_k$), à chaque trame d'un signal d'entrée, et

une unité d'émission (3, 4) qui est destinée à sélectionner une valeur quantifiée optimale de l'unité de codage optimale ($I_1$ ... $I_k$), parmi des valeurs quantifiées qui proviennent respectivement de l'ensemble d'unités de codage ($I_1$ ... $I_k$), sur la base d'une décision prise par l'unité d'évaluation (2), et à émettre une valeur quantifiée optimale en compagnie de l'information de décision,

caractérisé en ce que

les unités de codage ($I_1$ ... $I_k$) sont des unités de codage adaptatives, chaque unité de codage adaptative ($I_1$ ... $I_k$) ayant une caractéristique de traitement de quantificateur adaptatif différente, l'unité d'évaluation (2) détermine l'unité de codage adaptative ($I_1$ ... $I_k$) optimale sur la base d'erreurs de quantification qui proviennent respectivement de l'ensemble d'unités de codage adaptatives ($I_1$ ... $I_k$);

il existe une unité de copie de paramètres (5) dans laquelle des paramètres pour la détermination d'une condition interne de l'unité de codage adaptative ($I_1$ ... $I_k$) sont introduits à partir de toutes les unités de l'ensemble d'unités de codage adaptatives ($I_1$ ... $I_k$), et un paramètre optimal de l'unité de codage adaptative ($I_1$ ... $I_k$) optimale est sélectionné et émis vers d'autres unités de codage adaptatives ($I_1$ ... $I_k$), à chaque trame, conformément à une décision prise par l'unité d'évaluation (2); et

chacune des autres unités de codage adaptatives ($I_1$ ... $I_k$) commence un traitement de signal d'une trame suivante après avoir copié le paramètre optimal qui est émis par l'unité de copie de paramètres (5), sous la forme d'un paramètre propre à cette unité.

11. Un dispositif émetteur selon la revendication 10, dans lequel une différence entre des caractéristiques de traitement de l'ensemble d'unités de codage adaptatives ($I_1$ ... $I_k$) est la différence entre des coefficients d'actualisation de valeur de pas de quantification des quantificateurs adaptatifs (11).

12. Un dispositif émetteur selon la revendication 10, dans lequel l'unité de codage adaptative ($I_1$ ... $I_k$) est un codeur de modulation par impulsions et codage de type différentiel adaptatif.

**13.** Un dispositif émetteur selon la revendication 10, dans lequel l'unité de codage adaptative ($I_1$ ... $I_k$) comprend un soustracteur (10) qui est destiné à calculer une erreur de prédiction correspondant à une différence entre un signal d'entrée et une valeur prédite, le quantificateur adaptatif (11) pour la quantification adaptative de l'erreur de prédiction, un quantificateur adaptatif inverse (12) pour effectuer une quantification adaptative inverse d'une valeur quantifiée provenant du quantificateur adaptatif (11), un prédicteur (14, 15, 16) qui est destiné à calculer une valeur prédite sur la base d'un signal de sortie passé provenant du quantificateur adaptatif inverse (12), et une unité de calcul d'erreur (17) qui est destinée à calculer une erreur de quantification correspondant à une valeur de différence entre une erreur de prédiction et une valeur résultant de la quantification inverse, qui provient du quantificateur inverse (12).

**14.** Un dispositif émetteur selon la revendication 13, dans lequel le prédicteur (14, 15, 16) comprend un prédicteur de zéro (14) et un prédicteur de pôle (15).

**15.** Un dispositif émetteur selon la revendication 11, dans lequel le paramètre interne de l'unité de codage adaptative ($I_1$ ... $I_k$) qui doit être copié par l'unité de copie de paramètres (5) est un coefficient d'actualisation de valeur de pas de quantification.

**16.** Un dispositif émetteur selon la revendication 15, dans lequel le paramètre interne à copier comprend en outre des données de prises et un coefficient de prédiction du prédicteur (14, 15, 16).

**Patentansprüche**

**1.** Kodierübertragungsgerät, mit einer Sendervorrichtung und einer Empfängervorrichtung, wobei die Sendervorrichtung umfaßt:

eine Vielzahl von Kodiereinheiten ($I_1$...$I_k$) und einen adaptiven Quantisierer (11) zum Ausgeben eines quantisierten Wertes gemäß einem Eingangssignal sowie eine Fehlerberechnungseinheit (17) zum Berechnen des Quantisierungsfehlers des adaptiven Quantisierers (11), wobei jede der Vielzahl von Kodiereinheiten ($I_1$...$I_k$) verschiedene Verarbeitungscharakteristiken aufweist;

eine Auswerteeinheit (2) zum Entscheiden, welche unter der Vielzahl von Kodiereinheiten ($I_1$...$I_k$) eine optimale Kodiereinheit ist, eine optimale Quantisierung bei jedem Rahmen eines Eingangssignales durchzuführen; und

eine Sendeeinheit (3,4) zum Auswählen eines optimal quantisierten Wertes von der optimalen Kodiereinheit ($I_1$...$I_k$) unter den quantisierten Werten, die jeweils von der Vielzahl von Kodiereinheiten ($I_1$...$I_k$) auf der Basis einer Entscheidung durch die Auswerteeinheit (2) eingegeben worden sind und zum Übertragen des optimalen quantisierten Wertes zusammen mit der Entscheidungsinformation;

wobei die Empfängervorrichtung umfaßt:

eine Unterteilungseinheit (6) zum Unterteilen eines von der Sendervorrichtung empfangenen Signales in den quantisierten Wert und die Entscheidungsinformation;

eine adaptive Dekodiereinheit (7) zum Dekodieren des von der Unterteilungseinheit (6) erhaltenen, quantisierten Wertes in das ursprüngliche Eingangssignal; und

einer Optimumsteuerungseinheit (72) zum Steuern der Verarbeitungscharakteristik der adaptiven Dekodiereinheit (7), gemäß der von der Unterteilungseinheit (6) erhaltenen Entscheidungsinformation eine optimale Verarbeitungscharakteristik zu werden,

dadurch **gekennzeichnet,** daß in der Sendervorrichtung

die Kodiereinheiten ($I_1$...$I_k$) adaptive Kodiereinheiten sind, wobei jede adaptive Kodiereinheit ($I_1$...$I_k$) eine andere adaptive Quantisierer-Verarbeitungscharakteristik aufweist, die Auswerteeinheit (2) über die optimale adaptive Kodiereinheit ($I_1$...$I_k$) auf der Grundlage von von der Vielzahl von adaptiven Kodiereinheiten ($I_1$...$I_k$) jeweils eingegebenen Quantisierungsfehlern entscheidet, durch eine Parameterkopiereinheit (5), in welche Parameter zum Bestimmen einer inneren Bedingung der adaptiven Kodiereinheiten ($l_1...l_k$) von allen der Vielzahl der adaptiven Kodiereinheiten ($l_1...l_k$) eingegeben werden, daß ein optimaler Parameter einer optimalen, adaptiven Kodiereinheit ($l_1...l_k$) gewählt wird und zu anderen adaptiven Kodiereinheiten ($l_1...l_k$) bei jedem Rahmen gemäß einer Entscheidung durch die Auswerteeinheit (2) gesendet wird; und

jede der anderen adaptiven Kodiereinheiten ($l_1...l_k$) nach Kopieren des optimalen, von der Parameterkopiereinheit (5) als ein eigener Parameter gesendeten Parameters einen Signalprozeß für einen nächsten Rahmen startet.

2. Kodierübertragungsgerät nach Anspruch 1,
   dadurch **gekennzeichnet,** daß
   die Sendervorrichtung ferner eine Fehlerkorrektur-Kodiereinheit (81) zum Ausführen eines Fehlerkorrektur-Kodierprozesses an der Entscheidungsinformation von der Auswerteeinheit (2) umfaßt, wodurch die durch die Fehlerkorrekturkodierung verarbeitete Entscheidungsinformation an die Empfängervorrichtung gesendet wird;

   die Empfängervorrichtung ferner eine Fehlerkorrektureinheit (82) zum Durchführen des Fehlerkorrekturprozesses an der durch die Unterteilungseinheit (6) unterteilten Entscheidungsinformation umfaßt, wodurch die fehlerkorrigierte Entscheidungsinformation an die Optimumsteuerungseinheit (72) gesendet wird.

3. Kodierübertragungsgerät nach Anspruch 1,
   dadurch **gekennzeichnet,** daß
   die Empfängervorrichtung ferner ein Nachverarbeitungsfilter (8) umfaßt, welches an einer letzteren Stufe der adaptiven Dekodiereinheit (7) angeordnet ist, und der Paramter des Nachverarbeitungsfilters (8) gemäß dem Parameter der adaptiven Dekodiereinheit (7) variiert wird.

4. Kodierübertragungsgerät nach Anspruch 1,
   dadurch **gekennzeichnet,** daß
   die Differenz der Verarbeitungscharakteristik zwischen der Vielzahl von adaptiven Kodiereinheiten ($l_1...l_k$) die Differenz von Quantisierungsschrittgrößen-Aktualisierungskoeffizienten zwischen den adaptiven Quantisierern (11) ist.

5. Kodierübertragungsgerät nach Anspruch 1,
   dadurch **gekennzeichnet,** daß
   die adaptive Kodiereinheit ($l_1...l_k$) ein adaptiver differentieller Impulscodemodulationskodierer ist.

6. Kodierübertragungsgerät nach Anspruch 1,
   dadurch **gekennzeichnet,** daß
   die adaptiven Kodiereinheiten ($l_1...l_k$) einen Subtrahierer (10) zum Berechnen eines Vorhersagefehlers umfassen, welcher einer Differenz zwischen einem Eingangssignal und einem vorhergesagten Wert entspricht, den adaptiven Quantisierer (11) zum adaptiven Quantisieren des Vorhersagefehlers, einen adaptiven, inversen Quantisierer (12) zum adaptiven, inversen Quantisieren eines quantisierten Wertes von dem adaptiven Quantisierer (11), einen Prediktor (14, 15, 16) zum Berechnen des vorhergesagten Wertes auf der Grundlage vorangehender Ausgangssignale von dem adaptiven, inversen Quantisierer und eine Fehlerberechnungseinheit (17) zum Berechnen eines Quantisierungsfehlers entsprechend einem differentiellen Wert zwischen einem Vorhersagefehler und einem invers quantisierten Wert von dem inversen Quantisierer (12).

7. Kodierübertragungsgerät nach Anspruch 6,
   dadurch **gekennzeichnet,** daß
   der Prediktor (14, 15, 16) einen Nullstellen-Prediktor (14) und einen Polstellen-Prediktor (15) umfaßt.

8. Kodierübertragungsgerät nach Anspruch 4,
   dadurch **gekennzeichnet,** daß
   der innere, von der Parameterkopiereinheit (5) zu kopierende Parameter der adaptiven Kodiereinheit ($l_1...l_k$) ein Quantisierungsschrittgrößen-Aktualisierungskoeffizient ist.

9. Kodierübertragungsgerät nach Anspruch 8,
dadurch **gekennzeichnet, daß**
der innere, zu kopierende Parameter ferner Abgriffdaten (Tab-Daten) sowie einen Vorhersagekoeffizienten des Prediktors (14, 15, 16) einschließt.

10. Sendervorrichtung, welche angepaßt ist an ein Kodierübertragungsgerät zum Durchführen von Kodierung mit einer adaptiven Quantisierung, mit:

einer Vielzahl von Kodiereinheiten ($l_1...l_k$) und einem adaptiven Quantisierer (11) zum Ausgeben eines quantisierten Wertes gemäß einem Eingangssignal sowie einer Fehlerberechnungseinheit (17) zum Berechnen des Quantisierungsfehlers des adaptiven Quantisierers (11), wobei jede der Vielzahl von Kodiereinheiten ($l_1...l_k$) verschiedene Verarbeitungscharakteristiken aufweist;

einer Auswerteeinheit (2) zum Entscheiden, welche unter der Vielzahl von Kodiereinheiten ($l_1...l_k$) eine optimale Kodiereinheit ist, eine optimale Quantisierung bei jedem Rahmen eines Eingangssignales durchzuführen; und

einer Sendeeinheit (3,4) zum Auswählen eines optimal quantisierten Wertes von der optimalen Kodiereinheit ($l_1...l_k$) unter den quantisierten Werten, die jeweils von der Vielzahl von Kodiereinheiten ($l_1...l_k$) auf der Basis einer Entscheidung durch die Auswerteeinheit (2) eingegeben worden sind und zum Übertragen des optimalen quantisierten Wertes zusammen mit der Entscheidungsinformation;

dadurch **gekennzeichnet, daß**

die Kodiereinheiten ($l_1...l_k$) adaptive Kodiereinheiten sind, wobei jede adaptive Kodiereinheit ($l_1...l_k$) eine andere adaptive Quantisiererverarbeitungscharakteristik aufweist, und die Auswerteeinheit (2) über die optimale adaptive Kodiereinheit ($l_1...l_k$) auf der Grundlage von von der Vielzahl von adaptiven Kodiereinheiten ($l_1...l_k$) jeweils eingegebenen Quantisierungsfehlern entscheidet;

durch eine Parameterkopiereinheit (5), in welche Parameter zum Bestimmen einer inneren Bedingung der adaptiven Kodiereinheit ($l_1...l_k$) von allen der Vielzahl der adaptiven Kodiereinheiten ($l_1...l_k$) eingegeben werden und ein optimaler Parameter von der optimalen adaptiven Kodiereinheit ($l_1...l_k$) gewählt wird und zu anderen adaptiven Kodiereinheiten ($l_1...l_k$) bei jedem Rahmen gemäß einer Entscheidung durch die Auswerteeinheit (2) gesendet wird; und

jede der anderen adaptiven Kodiereinheiten ($l_1...l_k$) nach Kopieren des von der Parameterkopiereinheit (5) gesendeten Parameters als ein eigener Parameter eine Signalverarbeitung eines nächsten Rahmens startet.

11. Sendevorrichtung nach Anspruch 10,
dadurch **gekennzeichnet, daß**
eine Differenz zwischen Verarbeitungscharakteristiken der Vielzahl von adaptiven Kodiereinheiten ($l_1...l_k$) die Differenz zwischen Quantisierungsschrittgrößen-Aktualisierungskoeffizienten der adaptiven Quantisierer (11) ist.

12. Sendevorrichtung nach Anspruch 10,
dadurch **gekennzeichnet, daß**
die adaptive Kodiereinheit ($l_1...l_k$) ein adaptiver differentieller Impulscodemodulationskodierer it.

13. Sendevorrichtung nach Anspruch 10,
dadurch **gekennzeichnet, daß**
die adaptive Kodiereinheit ($l_1...l_k$) einen Subtrahierer (10) zum Berechnen eines Vorhersagefehlers entsprechend einer Differenz zwischen einem Eingangssignal und einem vorhergesagten Wert umfaßt, den adaptiven Quantisierer (11) zum adaptiven Quantisieren des Vorhersagefehlers, einen adaptiven, inversen Quantisierer (12) zum adaptiven, inversen Quantisieren eines quantisierten Wertes von dem adaptiven Quantisierer (11), einen Prediktor (14, 15, 16) zum Berechnen eines vorhergesagten Wertes auf der Grundlage eines vorangehenden Ausgangssignales von dem adaptiven inversen Quantisierer (12), und eine Fehlerberechnungseinheit (17) zum Berechnen eines Quantisierungsfehlers entsprechend

16

einem differentiellen Wert zwischen einem Vorhersagefehler und einem invers quantisierten Wert von dem inversen Quantisierer (12).

14. Sendervorrichtung nach Anspruch 13,
dadurch **gekennzeichnet,** daß
der Prediktor (14, 15, 16) einen Nullstellen-Prediktor (14) und einen Polstellen-Prediktor (15) einschließt.

15. Sendervorrichtung nach Anspruch 11,
dadurch **gekennzeichnet,** daß
der innere, von der Parameterkopiereinheit (5) zu kopierende Parameter der adaptiven Kodiereinheit ($I_1...I_k$) ein Quantisierungsschrittgrößen-Aktualisierungskoeffizient ist.

16. Sendervorrichtung nach Anspruch 15,
dadurch **gekennzeichnet,** daß
der innere, zu kopierende Parameter ferner Abgriffdaten (tab data) sowie einen Vorhersagekoeffizienten des Prediktors (14, 15, 16) einschließt.

*Fig. 1* PRIOR ART

## Fig.2 PRIOR ART

## Fig. 4

Fig. 3

# Fig. 5

# Fig. 6

EP 0 206 352 B1

## Fig. 7

## Fig. 8

| N | | ECC | | TRANSMISSION CODE | | | |
|---|---|---|---|---|---|---|---|
| high | low | high | low | ECC(h) | N(h) | ECC(ℓ) | N(ℓ) |
| O | O | O O | O O | O O | O | O O | O |
| O | 1 | O O | 1 1 | O O | O | 1 1 | 1 |
| 1 | O | 1 1 | O O | 1 1 | 1 | O O | O |
| 1 | 1 | 1 1 | 1 1 | 1 1 | 1 | 1 1 | 1 |

## Fig. 9

| SYN | N(h) | ECC(h) | N(ℓ) | ECC(ℓ) | $I_1$ | $I_2$ | $I_3$ | $L_4$ | $I_5$ | $I_6$ | $I_7$ | $I_8$ | } } | $I_{15}$ | $I_{16}$ |

## Fig. 10

| REC. CODE | | | ERROR CORRECTED OUTPUT | | |
|---|---|---|---|---|---|
| ECC | | N′ | ECC | | N |
| O | O | O | O | O | O |
| O | O | 1 | O | O | O |
| O | 1 | O | O | O | O |
| O | 1 | 1 | 1 | 1 | 1 |
| 1 | O | O | O | O | O |
| 1 | O | 1 | 1 | 1 | 1 |
| 1 | 1 | O | 1 | 1 | 1 |
| 1 | 1 | 1 | 1 | 1 | 1 |

24

## Fig. 11

Fig. 12